(19) **Europäisches Patentamt**

**European Patent Office**

**Office européen des brevets**

(11) **EP 0 653 853 B1**

(12) **FASCICULE DE BREVET EUROPEEN**

(45) Date de publication et mention
de la délivrance du brevet:
**02.08.2000 Bulletin 2000/31**

(51) Int. Cl.[7]: **H04B 10/10**, H04B 10/22

(21) Numéro de dépôt: **94402520.4**

(22) Date de dépôt: **08.11.1994**

(54) **Système de communication en espace libre à détection hétérodyne grand champ**

Leitungsungebundenes Kommunikationssystem mit breiter Sichtfeld-Überlagerungsdetektion

Free space communications system with wide field of view heterodyne detection

(84) Etats contractants désignés:
**FR GB**

(30) Priorité: **16.11.1993 FR 9313642**

(43) Date de publication de la demande:
**17.05.1995 Bulletin 1995/20**

(73) Titulaire: **THOMSON-CSF**
**75008 Paris (FR)**

(72) Inventeurs:
 • **Breugnot, Sébastien**
  **F-92402 Courbevoie Cedex (FR)**
 • **Defour, Martin**
  **F-92402 Courbevoie Cedex (FR)**
 • **Rajbenbach, Henri**
  **F-92402 Courbevoie Cedex (FR)**

(74) Mandataire: **Lincot, Georges**
  **Thomson-CSF Propriété Intellectuelle,**
  **Département Brevets,**
  **13, Avenue du Président Salvador Allende**
  **94117 Arcueil Cédex (FR)**

(56) Documents cités:
  **US-A- 3 752 992       US-A- 5 025 488**
  **US-A- 5 184 241**

 • **PROCEEDINGS OF THE 45TH ANNUAL SYMPOSIUM ON FREQUENCY CONTROL, Mai 1991, LOS ANGELES, US pages 500 - 507 CHEN ET AL 'Laser frequency stability requirements for coherent space communications'**

**Description**

L'invention se rapporte au domaine de la communication d'information par ondes transmises en espace libre, entre une station émettrice et une station réceptrice; plus particulièrement, l'invention a pour objet un système de communication utilisant la détection hétérodyne dans un tel espace, c'est-à-dire dans un milieu de transmission naturelle des ondes électromagnétiques.

Face aux menaces et agressions (brouillage, intrusion, etc...), les techniques actuelles s'orientent vers le développement de systèmes moins vulnérables par amélioration, d'une part de leur discrétion (diminution de Surface Equivalente Laser ou SEL) et, d'autre part, de leur résistance (appelée "durcissement") vis-à-vis des perturbateurs.

Dans ce contexte, la liaison optique par faisceaux lumineux (dans le domaine spectral allant du visible à l'infrarouge) offre des avantages certains par rapport aux liaisons électromagnétiques classiques (effectuées dans le domaine des hyperfréquences ou des radio-fréquences). En effet, la très forte directivité et le domaine spectral bien distinct des faisceaux lumineux par rapport au domaine électromagnétique, donne aux utilisateurs des garanties de discrétion, alors que les liaisons électromagnétiques classiques se montrent généralement très sensibles aux divers brouillages. En outre, la liaison optique permet d'avoir une bande passante utilisable élevée, allant de quelques centaines de MHz au GHz. Il convient également de noter que l'encombrement des moyens de transmission est rendu minimal par la mise en oeuvre d'une liaison optique.

Certains moyens connus de communication en espace libre utilisent des méthodes de détection hétérodyne, localisés sur la station détectrice, de l'onde signal émise par la station émettrice. La détection hétérodyne consiste à superposer une deuxième onde de fréquence voisine, appelée oscillateur local, puis à analyser le signal de battement délivré par un détecteur optique sur lequel les deux ondes interfèrent. Par exemple, une station émettrice émet en continu un faisceau lumineux de fréquence $f_0 + f_i$, $f_0$ étant la fréquence du laser et $f_i$ la fréquence porteuse des informations communiquées. La station réceptrice mélange, au niveau du détecteur optique, le faisceau reçu de fréquence $f_0 + f_i + \delta f_d$, $\delta f_d$ étant le décalage Doppler provoqué par la différence de vitesses entre les deux stations, et le faisceau lumineux continu de l'oscillateur local émis par une source laser à la fréquence $f_0$. Les deux sources laser, celle de la station émettrice et celle de la station réceptrice fonctionnant en oscillateur local, sont asservies classiquement en fréquence de manière à émettre à la même fréquence $f_0$. Un signal de battement, obtenu à partir du mélange des deux faisceaux, est obtenu en sortie des détecteurs optiques. Ce signal de fréquence $f_i + \delta f_d$ est alors analysé dans un circuit de traitement pour décoder les informations véhiculées par la fréquence porteuse.

Cette technique souffre de plusieurs inconvénients majeurs. Le premier est la contrainte d'alignement entre la direction du faisceau signal provenant de la source émettrice et la direction du faisceau oscillateur local. Cette contrainte résulte du respect de la loi d'antenne: le faisceau signal doit se trouver dans un champ angulaire $\Omega$ égal $\lambda^2/A$, $\lambda$ étant la longueur d'onde du faisceau signal, et A l'aire de la pupille de réception. En utilisant des faisceaux dans les bandes spectrales infrarouges de transmission (bande II 3 à 5 $\mu$, ou préférentiellement bande III 8 à 12 $\mu$), le champ angulaire devient plus important. Mais les détecteurs infrarouges sont refroidis nécessairement à très basse température (par exemple à 77° K) et sont donc très chers.

Le second inconvénient majeur est l'ignorance de la valeur de la fréquence de battement $f_i + \delta f_d$, car la valeur de $\delta f_d$ n'est pas connue. Dans ces conditions, l'analyse du signal de battement devient délicate. En effet, soit l'analyse se fait sur une bande passante suffisamment large pour inclure nécessairement la fréquence de battement, mais alors la sensibilité du système est fortement dégradée (par affaiblissement du rapport signal/bruit); soit le dispositif d'analyse est un dispositif complexe qui effectue une recherche spectrale de la fréquence de battement sur une bande étroite de balayage.

Un dernier inconvénient majeur est la limitation du diamètre de la pupille d'entrée de la station réceptrice. En effet, pour recueillir des faisceaux de front d'onde de profils variés, il peut être tentant d'augmenter le diamètre de la pupille d'entrée. Mais un espace libre est habituellement soumis à de fortes turbulences; une augmentation du diamètre de la pupille augmente alors l'influence de cette turbulence, ce qui perturbe d'autant la détection du signal.

L'invention vise au contraire à obtenir une détection hétérodyne sensible, tout en s'affranchissant des contraintes de directivité liée à la limitation de champ de réception (exprimée par la loi d'antenne), ou de la limitation du diamètre de la pupille d'entrée (du fait des turbulences), tout en simplifiant l'analyse du signal de battement.

Pour atteindre ces objectifs, la présente invention propose de réaliser le faisceau oscillateur local à partir de la diffraction d'un faisceau pompe sur un réseau d'indices créés dans un milieu non linéaire, entre une partie du faisceau signal reçu et le faisceau pompe, cette partie du faisceau de signal reçu ne contenant pas la fréquence porteuse d'informations $f_i$. Si la source émettrice et la source de pompe sont asservies en fréquence, le faisceau de pompe après diffraction est adapté en temps réel, d'une part, à la fréquence fondamentale du faisceau signal reçu, $f_0 + \delta f_d$ et d'autre part, aux variations du front d'onde. Dans ces conditions, le signal de battement a une pulsation qui ne dépend que de la fréquence porteuse d'informations, et l'identité des variations de front d'onde entre le faisceau de pompe diffracté et le faisceau signal reçu est obtenu indépendamment de la direction du faisceau ou du diamètre de la pupille.

Plus précisément, l'invention a pour objet un système de communication en espace libre à détection hétérodyne, comportant une station émettrice équipée d'une source émettant un faisceau d'ondes lumineuse cohérente de fréquence de base modulée par une fréquence porteuse du signal utile correspondant aux informations à transmettre, et une station réceptrice apte à recueillir ces informations à partir d'un signal de battement formé dans un détecteur, par mélange du faisceau reçu correspondant au faisceau émis et d'un faisceau d'ondes provenant d'un oscillateur local, le système étant caractérisé en ce que le faisceau émis par la station émettrice comporte en outre des ondes de fréquence de base non modulées formant un faisceau de référence, en ce que la station réceptrice comporte un élément à cristal non linéaire dans lequel les ondes d'un faisceau de pompe émis par la source locale et les ondes de fréquence de base provenant de la station émettrice créent par interférence un réseau d'indices de réfraction, les ondes du faisceau oscillateur local étant obtenues par diffraction des ondes du faisceau de pompe par ce réseau d'indices, avant d'être mélangées aux ondes d'un faisceau utile correspondant au signal utile émis pour former le signal de battement.

Selon une première forme de réalisation, le faisceau émis par la source de la station émettrice est séparé spatialement en deux sous-faisceaux, par exemple à l'aide d'une lame séparatrice, l'un des deux sous-faisceaux étant alors modulé en fréquence, par exemple en mettant en oeuvre une cellule acoustooptique. Les deux sous-faisceaux sont ensuite disposés en parallèle pour constituer un faisceau unique bifréquence, transmis dans l'espace libre. Préférentiellement, le cristal non linéaire et la fréquence porteuse sont choisis pour que seul le réseau d'interférences réalisé à partir du faisceau d'ondes de fréquence de base provenant de la source émettrice et du faisceau d'ondes émise par la source locale induisent un réseau d'indice stable dans le milieu non linéaire.

Selon une autre forme de réalisation, le faisceau émis par la station émettrice est un faisceau multispectral obtenu par modulation périodique de la phase de la fréquence porteuse.

Avantageusement, la source de la station émettrice et celle de la station réceptrice sont des lasers émettant en continu, et sont asservies en fréquence de manière à rendre stable le réseau d'indice photoinduit par les ondes de fréquence de base reçues par la station réceptrice.

D'autres avantages et caractéristiques apparaîtront à la lecture de la description qui suit, accompagnée des figures annexées qui représentent respectivement:

- la figure 1, un exemple de réalisation d'un système de communication selon l'art antérieur;
- la figure 2, un exemple de réalisation d'un système de communication selon l'invention.

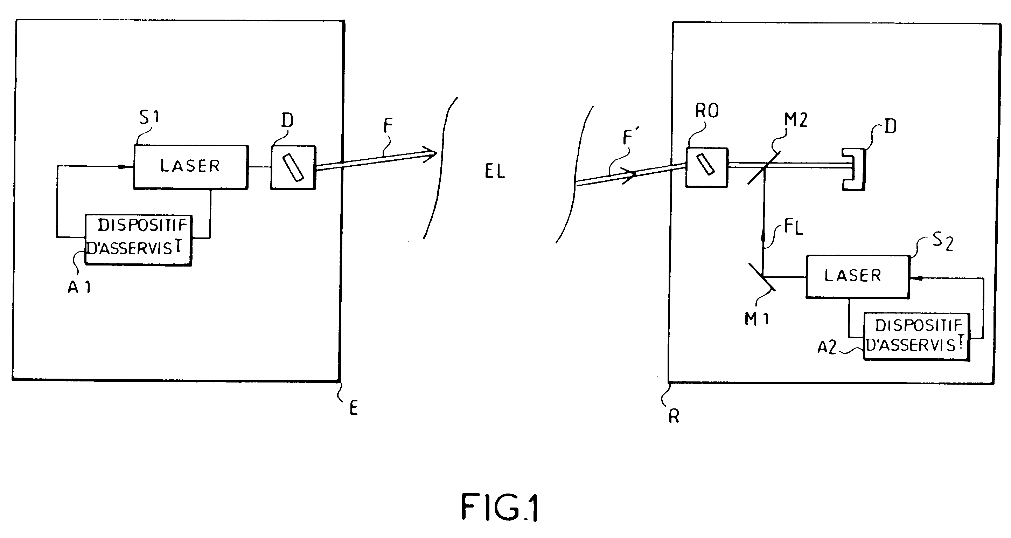

La figure 1, qui illustre un exemple de réduction d'un système connu de communication en espace libre, met en évidence l'utilisation d'un premier circuit d'asservissement A1 pour la source d'émission laser S1 d'une station émettrice E. Ce circuit A1 permet d'annuler les écarts de fréquences des ondes émises, relativement à une fréquence $f_0$. Le faisceau F émis par la source S1 traverse après avoir été orienté par un dispositif de déflexion D, un espace libre EL avant d'être reçu sous une forme F' par un dispositif de réception optique RO d'une station réceptrice R, qui se déplace à une vitesse différente de celle de la station émettrice.

La station R comporte un détecteur D qui mélange le faisceau reçu F', ayant subi un décalage en fréquence $\delta f_d$ du fait de la différence de vitesses entre les stations, et un faisceau continu FL émis par une source laser locale S2 (oscillateur local). grâce aux miroirs M1 et M2. Un autre circuit d'asservissement A2 est nécessaire pour que les écarts de la fréquence de cette source à la valeur de base $f_0$ soient annulés. Le signal de battement est observé à la fréquence fi + $\delta f_d$, fi étant la fréquence porteuse d'informations émises par la source S1 et à transmettre à la station réceptrice.

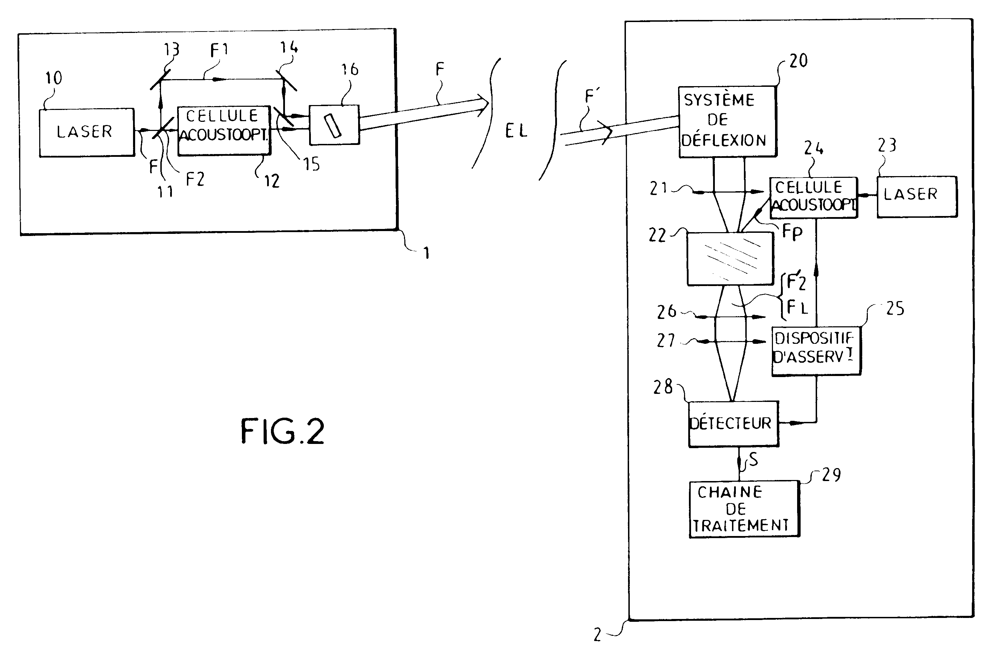

L'exemple de réalisation de l'invention, présentée sous forme schématisée par la figure 2, comporte également une station émettrice 1 et une station réceptrice 2. La station émettrice 1 comprend une source laser 10 qui émet en continu un faisceau de lumière cohérente F, de fréquence $f_0$ et de puissance P. Dans cet exemple, la source de lumière cohérente est un microlaser YAG émettant un faisceau à la longueur d'onde 1,064 µm avec une puissance égale à 25 mW.

Le faisceau F est séparé spatialement en deux sous-faisceaux, F1 et F2, de puissances égales à P/2, à l'aide d'une lame séparatrice 11, partiellement réfléchissante à la longueur d'onde du faisceau émis par la source laser. Un des deux sous-faisceaux, F2 dans l'exemple illustré, traverse alors une cellule acoustooptique 12 afin d'être modulée sur la fréquence $f_i$, porteuse du signal d'information utile. A la sortie de la cellule 12, les deux faisceaux F1 et F2 sont rendus colinéaires par déviation du faisceau F1 sur des miroirs 13, 14, 15, de manière à ne constituer qu'un seul faisceau F, bifréquence $f_0$, $f_0 + f_i$ et de puissance P.

Afin d'illuminer la station réceptrice 2, le faisceau F est classiquement collimaté et orienté, à travers un dispositif optique de collimation et de déflexion 16. Un aspect important de l'invention est de pouvoir disposer, dans le faisceau F émis par la station émettrice et transmis à travers l'espace libre EL, d'un faisceau F1 d'ondes ayant une fréquence de référence égale à la fréquence de base $f_0$, pour former au niveau de la station réceptrice 2 un signal de référence. Ce signal, dont les variations de front d'onde sont identiques à celles du front d'onde transportant l'information utile, va générer lui-même, dans les conditions décrites ci-après, l'oscillateur local.de la détection hétérodyne.

Dans la forme de réalisation illustrée à la figure 2, le faisceau F est collecté sous forme d'un faisceau F', au niveau de la station réceptrice 2, par un système optique de déflexion 20 associé à une pupille d'entrée dont le diamètre vaut, dans l'exemple de réalisation, 100 mm. Le faisceau F' est ensuite focalisé, grâce à une lentille 21, dans un matériau 22, de type non linéaire. Le matériau non linéaire utilisé est choisi parmi les cristaux non linéaires connus (BSO, AsGa, $BaTiO_3$ etc...) en fonction des conditions de mise en oeuvre décrites ci-après.

La station réceptrice est également équipée d'une source laser 23 qui, dans l'exemple de réalisation présentée, est un microlaser YAG du même type que celui qui équipe la station émettrice 1. La source laser 23 émet un faisceau continu $F_p$, de puissance $P_p$, et de fréquence contrôlée par une cellule acoustooptique 24, elle-même commandée par un dispositif d'asservissement 25.

Le faisceau $F_p$ est un faisceau de pompe, qui est mélangé, avec le faisceau F'dans le milieu non linéaire 22, et selon un angle d'incidence fonction des paramètres du matériau utilisé (en particulier sa constante de temps) pour réaliser des interférences. Les flux lumineux sortant du matériau non linéaire 22 sont focalisés par un groupe optique composé par exemple de deux lentilles 26 et 27 sur un détecteur optique 28 qui, dans l'exemple de réalisation, est un détecteur à avalanches au silicium. Le détecteur 28 fournit un signal de battement S qui est analysé par le dispositif d'asservissement 25 et traité par une chaîne électronique de traitement 29. Cette chaine de traitement permet, de manière connue en soi, d'identifier par démodulation les informations émises par la station émettrice 1.

Lorsque l'une des stations émettrices ou réceptrices se déplacent, ce qui est souvent le cas pour des communications terre/air, mer/air, mer/mer ou air/air, le faisceau F subit un décalage en fréquence $\delta f_d$ entre son émission et sa réception. Ce décalage, qui est dû à la différence de vitesse entre les deux stations, est bien connu sous le nom d'effet DOPPLER. Le faisceau F' qui atteint la station réceptrice 2 est alors un faisceau bifréquence de valeurs:

$$f_1 = f_0 + \delta f_d$$

$$f_2 = f_0 + f_i + \delta f_d$$

et de puissance P' = kP, k étant le coefficient de transmission dans l'espace libre (typiquement k = 0,7 par km).

Le faisceau F' se décompose en deux sous-faisceaux correspondant aux faisceaux émis F1 et F2, un faisceau de référence F'1 de fréquence f1 porteur du signal de référence et un faisceau utile F'2 de fréquence f2 et porteur du signal utile.

Dans le milieu non linéaire 22, le faisceau F' et le faisceau de pompe $F_p$ produisent des réseaux d'interférence se déplaçant à des vitesses proportionnelles à la différence de leur fréquence. Si la fréquence du faisceau de pompe $F_p$ est notée $f_0 + \delta f$, $\delta f$ étant ajustée par la cellule acoustooptique 24, le faisceau de pompe $F_p$ produit, avec respectivement le faisceau de référence et le faisceau utile, des réseaux d'interférence dont les vitesses de déplacement sont respectivement proportionnelles à leur différence de fréquences, soit respectivement $\delta f_d - \delta f$ et $\delta f_d - \delta f + fi$.

Afin de réaliser un oscillateur local de fréquence égal à celle du signal de référence et de front d'onde identique à celui du faisceau F' reçu, c'est-à-dire ayant subi les variations dues aux perturbations de l'espace libre, un choix adapté du temps de réponse $\tau$ du cristal non linéaire utilisé, de la fréquence de modulation $f_i$ et/ou de la fréquence d'asservissement $\delta f$ du faisceau de pompe permet de créer un réseau d'indices photoinduit dans le milieu non linéaire à partir du seul signal de référence du faisceau F' et du faisceau de pompe $F_p$. Pour qu'il en soit ainsi, le temps de réponse $\tau$ du cristal non linéaire, la fréquence de modulation $f_i$ du signal utile et la fréquence d'asservissement $\delta f$ du faisceau de pompe sont choisis pour que les deux relations (I) et (II) suivantes soient satisfaites :

$$|\delta f_d - \delta f| \leq 1/\tau \qquad (I)$$

$$|f_i + \delta f_d - \delta f| \geq 1/\tau \qquad (II)$$

Le respect de la relation (II) signifie que le réseau d'interférence, réalisé à partir du faisceau utile du faisceau reçu F' et du faisceau de pompe $F_p$, ne produit pas de réseau d'indices suffisamment stable dans le milieu non linéaire pour être diffractant. Le faisceau utile F'2 du faisceau reçu F' est alors transmis sans être diffracté, à travers le milieu non linéaire, vers le détecteur optique.

En revanche, le respect de la relation (I) signifie que le faisceau de référence F'1 contenu dans le faisceau reçu F' et le faisceau de pompe $F_p$ produisent une structure de phase diffractante à variation d'indices photoinduite dans le milieu non linéaire, c'est-à-dire un réseau d'indice suffisamment stable. Sur ce réseau, le faisceau de pompe $F_p$ diffracte et génère ainsi un faisceau oscillateur local Fl de même front d'onde que le faisceau reçu F' (et donc que les faisceaux de référence et utile qui le composent) ; le faisceau Fl possède une fréquence $f_l$ égale à celle du faisceau de pompe $F_p$ augmentée d'un décalage DOPPLER $\delta f_d - \delta f$, provoqué par le déplacement du réseau d'interférence, soit:

$$f_l = f_0 + \delta f + \delta f_d - \delta f = f_0 + \delta f_d$$

Ainsi le faisceau oscillateur local a même fréquence et même front d'onde que le signal de référence du faisceau reçu F'. Les ondes du faisceau utile F'2 et les ondes du faisceau oscillateur local Fl, sont mélangés dans le détecteur optique 28 et produisent le signal de battement S à la fréquence $f_i$ égale à la différence de leurs fréquences. Le signal S est traité par la chaîne 29.

Le décalage en fréquence $\delta f$ est réglé pour que le réseau d'interférence se déplace à une vitesse permettant de satisfaire les relations (I) et (II). Ce réglage est obtenu à l'aide du dispositif d'asservissement 25 lorsque l'amplitude du signal de battement à la fréquence de modulation $f_i$ connue est maximale.

Par exemple la fréquence $f_i$ contient l'information à transmettre qui est codée de la façon suivante:

$f_i$ = 100 MHz pour un bit égal à 0
$f_i$ = 500 MHz pour un bit égal à 1

avec un débit d'information égal par exemple à 1 Mégabit par seconde. La chaîne de traitement 29 comprend deux filtres centrés en fréquence autour de 100 MHz et de 500 MHz avec une bande passante égale à 1 MHz. Dans ces conditions, la sensibilité du système, correspondant à un taux d'erreur par bit de $10^{-6}$, est de l'ordre de $2,5 \cdot 10^{-10}$ WATT correspondant à une portée d'environ 23 km.

En utilisant une source laser émettrice YAG à la longueur de 1,064 micromètres, le décalage en fréquence DOPPLER ($\delta f_d$) est d'environ 2 MHz par unité de différence de vitesses de déplacement entre les deux stations. Dans ces conditions, la vitesse optimale de déplacement du réseau d'interférence est égale à 1 mm par seconde, le champ électrique appliqué sur le cristal non linéaire étant de 5 à 10 Kvolts, par cm et le pas du réseau créé environ égal à 20 µm, alors que le temps de réponse $\tau$ d'un cristal GaAs est de 1 ms.

En ce qui concerne le bilan des puissances, il est à noter que le faisceau oscillateur local a la puissance du signal de référence amplifié, par la diffraction, d'un coefficient d'une valeur typiquement égale à 100.

Afin de transmettre un faisceau bifréquence F' sans recombinaison exacte des deux sous-faisceaux F1 et F2, correspondant au signal de référence et au signal utile, une autre forme de réalisation de l'invention peut être mise en oeuvre : elle consiste à moduler périodiquement, par exemple sinusoïdalement la phase du faisceau émis par la source laser et modulé par la cellule acoustooptique 12. Le faisceau émis peut être alors être considéré comme multispectral, de fréquences égales à $f_0$, $f_0 + f_i$, $f_0 + 2f_i$, etc., obtenus par décomposition en série de Fourier. Le signal de battement entre le signal utile du faisceau transmis, de fréquence $f_0 + \delta f_d$, et le faisceau de pompe s'effectue alors à une fréquence égale à $2f_i$.

Le système peut également comporter plusieurs stations émettrices associées à une ou plusieurs stations réceptrices, ces stations émettrices pouvant également être réceptrices et vice-versa.

## Revendications

**1.** Système de communication en espace libre à détection hétérodyne, comportant une station émettrice (1) équipée d'une source (S1; 10) émettant un faisceau (F) d'ondes lumineuses cohérentes de fréquence de base ($f_0$) modulée par une fréquence porteuse ($f_i$) du signal utile correspondant aux informations à transmettre, et une station réceptrice (2) apte à recueillir ces informations à partir d'un signal de battement formé dans un détecteur (28) par mélange du faisceau reçu (F') correspondant au faisceau émis (F) et d'un faisceau d'ondes (FL; Fl) provenant d'un oscillateur local (S2; 23), le système étant caractérisé en ce que le faisceau (F) émis par la station émettrice (1) comporte des ondes de fréquence de base ($f_0$) non modulées formant un faisceau de référence (F1), en ce que la station réceptrice (2) comporte un élément à cristal non linéaire (22) dans lequel les ondes d'un faisceau de pompe ($F_p$) émis par la source locale (23) et les ondes de fréquence de base ($f_0$) non modulées provenant de la station émettrice (1) créent par interférence un réseau d'indices de réfraction générant ainsi un faisceau oscillateur local (Fl) les ondes du faisceau oscillateur local (Fl) étant obtenues par diffraction des ondes du faisceau de pompe (Fp) par ce réseau d'indices, lesdits ondes du faisceau oscillateur local (Fl) étant mélangées aux ondes d'un faisceau utile (F'2) correspondant au signal utile émis pour former le signal de battement(s).

**2.** Système selon la revendication 1, caractérisé en ce que le faisceau (F) émis par la source (10) de la station émettrice (1) est séparé spatialement en deux sous-faisceaux (F1, F2), l'un de ces sous-faisceaux (F1) formant le signal de référence et l'autre (F2) le faisceau utile modulé sur la fréquence porteuse ($f_i$) en traversant une cellule acoustooptique (12) pour transporter le signal d'information utile, et en ce que le faisceau (F) est ensuite recomposé de façon à former un faisceau bifréquence ($f_0$, $f_0 + f_i$) transmis dans l'espace libre (EL).

**3.** Système selon la revendication 1, caractérisé en ce que le signal utile du faisceau (F) émis par la source laser (10) de la station émettrice (1) est modulé périodiquement en phase sur la fréquence porteuse ($f_i$).

**4.** Système selon l'une des revendications précédentes, caractérisé en ce que le faisceau (F) étant transmis dans l'espace (EL) avec un décalage en fréquence $\delta f_d$, le cristal non linéaire (22) de constante de temps $\tau$ et la valeur $f_i$ de la fréquence porteuse sont choisis pour que seul le réseau d'interférence obtenu avec le faisceau d'ondes de fréquence de base ($f_0 + \delta f_d$) du faisceau transmis (F') et le faisceau ($F_p$) émis par la source locale (23) de la station réceptrice (2) induisent un réseau d'indices stable dans le milieu non linéaire (22).

5. Système selon la revendication 4, caractérisé en ce que la fréquence ($f_p$) du faisceau de pompe ($F_p$) est ajustée par une cellule acousto-optique (24) commandée par un dispositif d'asservissement (25) couplé au détecteur (28) de sorte que son écart $\delta f$ à la fréquence de base $f_0$ vérifie les relations suivantes:

$$|\delta f_d - \delta f| \leq 1/\tau$$

$$|fi + \delta f_d - \delta f| \geq 1/\tau$$

6. Système selon la revendication 5, caractérisé en ce que le faisceau de pompe ($F_p$) diffracte sur le réseau d'indices créé par le signal de référence de fréquence $f_0 + \delta f_d$ du faisceau reçu (F') et par le faisceau de pompe ($F_p$) pour produire le faisceau oscillateur local (FI) de fréquence ($f_i$) égale à $f_0 + \delta f_d$, de même fréquence et de même front d'onde que le signal de référence du faisceau reçu (F') de sorte que le signal de battement obtenu par mélange hétérodyne entre le faisceau utile (F'2) du faisceau reçu (F') et le faisceau oscillateur local (FI) a pour fréquence la fréquence porteuse $f_i$.

**Claims**

1. Free-space communication system with heterodyne detection, comprising an emitting station (1) equipped with a source (S1; 10) which emits a beam (F) of coherent light waves of base frequency ($f_0$) modulated by a carrier frequency ($f_i$) of the useful signal corresponding to the information to be transmitted, and a receiving station (2) capable of receiving this information from a beat signal formed in a detector (28) by the mixing of the received beam (F'), corresponding to the emitted beam (F), and of a beam of waves (FL; FI) coming from a local oscillator (S2; 23), the system being characterized in that the beam (F) emitted by the emitting station (1) includes unmodulated waves of base frequency ($f_0$) which form a reference beam (F1), in that the receiving station (2) includes a nonlinear-crystal element (22) in which the waves of a pump beam ($F_p$) emitted by the local source (23) and the unmodulated waves of base frequency ($f_0$) coming from the emitting station (1) create, by interference, a refractive index grating which thus generates a

local-oscillator beam (FI), the waves of the local-oscillator beam (FI) being obtained by the diffraction of the waves of the pump beam ($F_p$) by this index grating, the said waves of the local-oscillator beam (FI) being mixed with the waves of a useful beam (F'2) corresponding to the emitted useful signal for forming the beat signal (S).

2. System according to Claim 1, characterized in that the beam (F) emitted by the source (10) of the emitting station (1) is spatially separated into two sub-beams (F1, F2), one (F1) of these sub-beams forming the reference signal and the other (F2) the useful beam modulated at the carrier frequency ($f_i$) by passing through an acoustooptic cell (12) for transporting the useful-information signal, and in that the beam (F) is then recomposed so as to form a two-frequency ($f_0$, $f_0 + f_i$) beam transmitted into free space (EL).

3. System according to Claim 1, characterized in that the useful signal of the beam (F) emitted by the laser source (10) of the emitting station (1) is periodically phase-modulated at the carrier frequency ($f_i$).

4. System according to one of the preceding claims, characterized in that since the beam (F) is transmitted into space (EL) with a frequency shift $\delta f_d$, the nonlinear crystal (22) of time constant $\tau$ and the value $f_i$ of the carrier frequency are chosen so that only the interference grating obtained with the beam of waves of base frequency ($f_0 + \delta f_d$) of the transmitted beam (F') and the beam ($F_p$) emitted by the local source (23) of the receiving station (2) create a stable index grating in the nonlinear medium (22).

5. System according to Claim 4, characterized in that the frequency ($f_p$) of the pump beam ($F_p$) is adjusted by an acoustooptic cell (24) controlled by a feedback device (25) coupled to the detector (28) so that its deviation $\delta f$ from the base frequency $f_0$ satisfies the following relationships:

$$|\delta f_d - \delta f| \leq 1/\tau$$

$$|f_i + \delta f_d - \delta f| \geq 1/\tau$$

6. System according to Claim 5, characterized in that the pump beam ($F_p$) is diffracted by the index grating created by the reference signal of frequency $f_0 + \delta f_d$ of the received beam (F') and by the pump beam ($F_p$) in order to produce the local-oscillator beam (FI) of frequency ($f_i$) equal to $f_0 + \delta f_d$, of the same frequency and the same wavefront as the reference signal of the received beam (F') so that the beat signal obtained by heterodyne mixing between the useful beam (F'2) of the received beam (F') and the local-oscillator beam (FI) has as frequency the carrier frequency $f_i$.

**Patentansprüche**

1. System zur Kommunikation im freien Raum mit Überlagerungserfassung, mit einer Sendestation (1), die mit einer Quelle (S1; 10) ausgerüstet ist, die ein Strahlenbündel (F) aus kohärenten Lichtwellen mit einer Basisfrequenz ($f_0$), die durch eine Trägerfrequenz ($f_i$) des den zu übertragenden Informationen entsprechenden Nutzsignals moduliert wird, aussendet, und einer Empfangsstation (2), die diese Informationen anhand eines Überlagerungssignals wiedergewinnen kann, das in einem Detektor (28) durch Mischen des empfangenen Strahlenbündels (F'), das dem ausgesendeten Strahlenbündel (F) entspricht, mit einem Wellenstrahlenbündel (FL; FI), das von einem Hilfsoszillator (S2; 23) stammt, gebildet wird, wobei das System dadurch gekennzeichnet ist, daß das von der Sendestation (1) ausgesendete Strahlenbündel (F) nicht modulierte Wellen mit einer Basisfrequenz ($f_0$) enthält, die ein Referenzstrahlenbündel (F1) bilden und daß die Empfangsstation (2) ein Element (22) mit nichtlinearem Kristall enthält, in dem die Wellen eines Pumpstrahlenbündels ($F_p$), die von der Hilfsquelle (23) ausgesendet werden, und die nicht modulierten Wellen mit Basisfrequenz ($f_0$), die von der Sendestation (1) stammen, durch Interferenz ein Beugungsindexgitter erzeugen, das somit ein Hilfsoszillator-Strahlenbündel (FI) erzeugt, dessen Wellen durch Beugung der Wellen des Pumpstrahlenbündels (Fp) durch dieses Indexgitter erhalten werden und mit den Wellen eines Nutzstrahlenbündels (F'2), das dem Nutzsignal entspricht, das für die Bildung des Überlagerungssignals (S) gebildet wird, gemischt werden.

2. System nach Anspruch 1, dadurch gekennzeichnet, daß das von der Quelle (10) der Sendestation (1) ausgesendete Strahlenbündel (F) räumlich in zwei Unterstrahlenbündel (F1, F2) getrennt wird, wovon eines (F1) das Referenzsignal und das andere (F2) das mit der Trägerfrequenz ($f_i$) modulierte Nutzsignal bildet, indem es eine akustooptische Zelle (12) durchläuft, um das Nutzinformationssignal zu transportieren, und daß das Strahlenbündel (F) anschließend in der Weise wieder zusammengesetzt wird, daß ein doppelfrequentes Strahlenbündel ($f_0$, $f_0 + f_1$) gebildet wird, das im freien Raum (EL) übertragen wird.

3. System nach Anspruch 1, dadurch gekennzeichnet, daß das Nutzsignal des Strahlenbündels (F), das von der Laserquelle (10) der Sendestation (1) ausgesendet wird, mit der Trägerfrequenz $f_i$)

periodisch phasenmoduliert wird.

4. System nach einem der vorhergehenden Ansprüche, dadurch gekennzeichnet, daß, da das Strahlenbündel (F) im Raum (EL) mit einer Frequenzverschiebung $\delta f_d$ übertragen wird, der nichtlineare Kristall (22) mit Zeitkonstante $\tau$ und der Wert $f_i$ der Trägerfrequenz in der Weise gewählt werden, daß nur das Interferenzgitter, das mit dem Wellenstrahlenbündel mit Basisfrequenz ($f_0 + \delta f_d$) des übertragenen Strahlenbündels (F') und mit dem Strahlenbündel ($F_p$), das von der Hilfsquelle (23) der Empfangsstation (2) ausgesendet wird, erhalten wird, ein stabiles Indexgitter in dem nichtlinearen Medium (22) induziert.

5. System nach Anspruch 4, dadurch gekennzeichnet, daß die Frequenz ($f_p$) des Pumpstrahlenbündels ($F_p$) durch eine akustooptische Zelle (24) eingestellt wird, die durch eine Regelungsvorrichtung (25) gesteuert wird, die mit dem Detektor (28) gekoppelt ist, derart, daß ihr Abstand $\delta f$ zur Basisfrequenz $f_0$ die folgenden Beziehungen erfüllt:

$$|\delta f_d - \delta f| \leq 1/\tau$$

$$|f_i + \delta f_d - \delta f| \geq 1/\tau$$

6. System nach Anspruch 5, dadurch gekennzeichnet, daß das Pumpstrahlenbündel ($F_p$) an dem Indexgitter, das durch das Referenzsignal mit Frequenz $f_0 + \delta t_d$ des empfangenen Strahlenbündels (F') und durch das Pumpstrahlenbündel ($F_p$) erzeugt wird, gebeugt wird, um das Hilfsoszillator-Strahlenbündel (FI) zu erzeugen, das eine Frequenz ($f_1$) besitzt, die gleich $f_0 + \delta f_d$ ist, und die gleiche Frequenz und die gleiche Wellenfront wie das Referenzsignal des empfangenen Strahlenbündels (F') besitzt, so daß das durch Überlagerungsmischung zwischen dem Nutzstrahlenbündel (F'2) des empfangenen Strahlenbündels (F') und dem Hilfsoszillator-Strahlenbündel (FI) erhaltene Überlagerungssignal als Frequenz die Trägerfrequenz $f_i$ besitzt.

FIG.1

EP 0 653 853 B1

FIG.2